Europäisches Patentamt

(19) European Patent Office

Office européen des brevets

(11) Veröffentlichungsnummer: **0 056 835**
**A2**

(12) # EUROPÄISCHE PATENTANMELDUNG

(21) Anmeldenummer: **81103475.0**

(22) Anmeldetag: **07.05.81**

(51) Int. Cl.³: **A 01 D 87/00**
**B 65 G 53/66**

(30) Priorität: **26.01.81 DE 3102458**
**16.02.81 DE 3105559**

(43) Veröffentlichungstag der Anmeldung:
**04.08.82 Patentblatt 82/31**

(84) Benannte Vertragsstaaten:
**AT CH FR GB IT LI NL SE**

(71) Anmelder: **Aichele, Michael**
**Forst 107 1/2**
**D-8999 Scheidegg(DE)**

(72) Erfinder: **Aichele, Michael**
**Forst 107 1/2**
**D-8999 Scheidegg(DE)**

(74) Vertreter: **Riebling, Günter, Dr. Ing. et al,**
**Rennerle 10 Postfach 3160**
**D-8990 Lindau(DE)**

(54) **Vorrichtung zum Abladen von Futter mit einem Abladegebläse.**

(57) Gegenstand der Erfindung ist eine Vorrichtung zum Abladen von Futter, wie Grünfutter, Silage und dgl., mit einem Abladegebläse 15, dessen Ansaugstutzen 16 das Futter über eine Zuführvorrichtung 1,2,6,11 zugeführt und aus dessen Ausblasstutzen das Futter ausgeblasen wird.

Die Erfindung besteht darin, daß am Ansaugstutzen des Abladegebläses eine Steuerungsvorrichtung angeordnet ist, welche den Ansaug-Unterdruck erfaßt und in Abhängigkeit hiervon die Aufgabe des Futters auf die Zuführvorrichtung steuert.

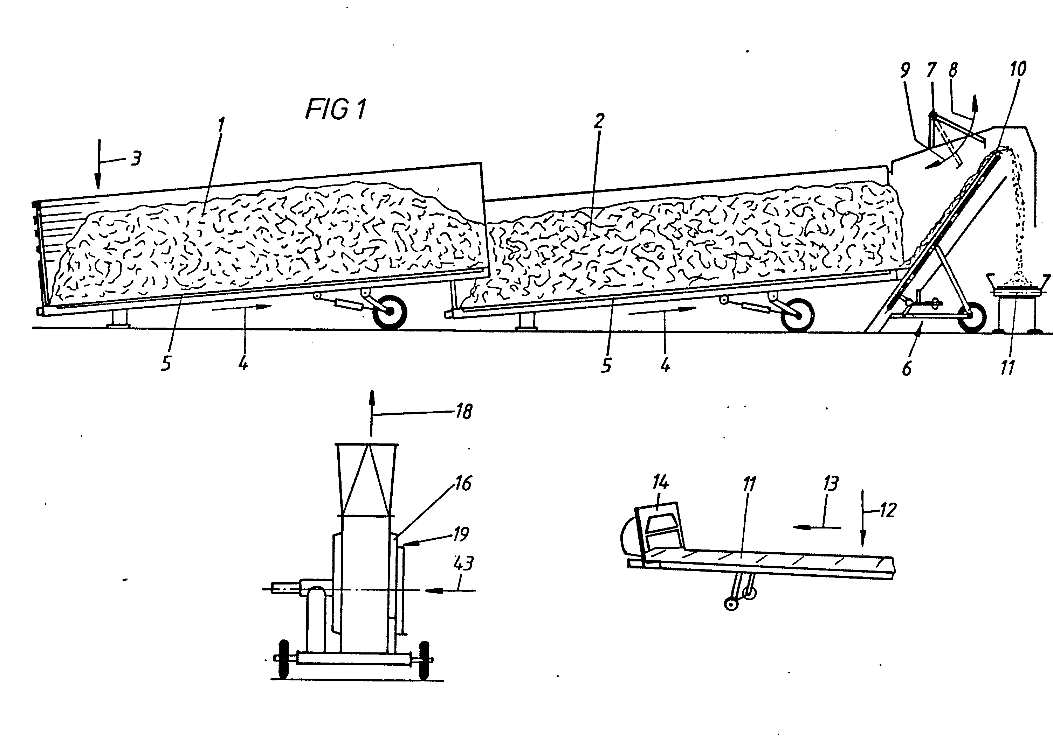

Die gesamte, erfindungsgemäße Steuerungsvorrichtung 20 steuert den Zuführantrieb der in Fig. 1 dargestellten Förderanlage.

Schaltet man das Abladegebläse 15 ein, wird vom Sog des Gebläses die Meßplatte 22 am Signalgeber in Richtung Gebläse angezogen Dadurch kippt der Signalgeber 19 aus der Ruhestellung in die Arbeitsstellung. Erst dadurch wird die Dosieranlage 6 freigegeben.

./...

FIG 1

Vorrichtung zum Abladen von Futter

mit einem Abladegebläse

-----------------------------------

Gegenstand der Erfindung ist eine Vorrichtung zum Abladen von Futter, wie Grünfutter, Silage und dgl., mit einem Abladegebläse, dessen Ansaugstutzen das Futter über eine Zuführvorrichtung zugeführt und aus dessen Ausblasstutzen das Futter ausgeblasen wird.

Eine eingangs genannte Vorrichtung ist in vielfältigen Ausführungsformen bekannt geworden und wird in der Landwirtschaft in großem Umfang eingesetzt.

Bei den bisher bekannten Vorrichtungen wird bei einer Dosieranlage, welche das Futter beispielsweise von einem Aufgabel-Förderband übernimmt, das Fördergutvolumen eingestellt. Während des Abladens mußte - bedingt durch die Inkonsistenz der Zusammensetzung des Futters - das Fördergutvolumen ständig nachkorrigiert werden. Entweder wurde zuviel oder zuwenig befördert. Bei zu großem Fördervolumen wurde das Abladegebläse überlastet und die Rohre zum Silo oder Heuverteiler verstopft. In diesem Fall mußte die gesamte Anlage abgeschaltet werden, und das Abladegebläse und die Rohre zum Silo freigemacht werden, was naturgemäß mit einem hohen Arbeits- und Zeitaufwand verbunden war.

Weiterhin nachteilig bei den bekannten Anlagen war, daß bei der Beförderung des Futters durch die Dosieranlage und des Förderbandes immer etwas Futter neben die Förderstraße fiel. Es bildeten sich kleine Häufchen, deren Größe immer stärker anwuchs, bis sie vom Sog des Abladegebläses erfaßt und das Gebläse hierdurch überlastet wurde. Auch in diesem Fall mußte das Dosiergerät und das Förderband schnell abgeschaltet werden, damit nicht noch mehr Futter zum Abladegebläse befördert wird.

Das Abladegebläse schaltet dann nach einer gewissen Zeit selbsttätig aus (Überlastungs-Schutz-Schalter). Die Rohre und das Abladegebläse müssen vom Futter befreit werden, und erst dann kann die Anlage wieder in Betrieb genommen werden.

Eine dritte Fehlerquelle war bei der Heuverteiler-Anlage im Heustock, weil das Futter im Heustock immer nur auf eine Stelle geblasen wurde und schnell zu einem großen Haufen heranwuchs, solange, bis das Austrittsrohr an der Heuverteiler-Anlage verstopft wurde und hierdurch ebenfalls das Abladegebläse überlastet wurde.

Die vorliegende Erfindung hat sich die Aufgabe gestellt, eine eingangs genannte Vorrichtung wesentlich betriebssicherer und in der Bedienung einfacher zu gestalten.

Zur Lösung der gestellten Aufgabe ist die Erfindung dadurch gekennzeichnet, daß am Ansaugstutzen des Abladegebläses eine Steuerungsvorrichtung angeordnet ist, welche den Ansaug-Unterdruck erfaßt und in Abhängigkeit hiervon die Aufgabe des Futters auf die Zuführvorrichtung steuert.

Wesentliches Merkmal der vorliegenden Erfindung ist also, daß die Ansaugleistung des Abladegebläses erfindungsgemäß erfaßt wird, und hiervon abhängig die Förderleistung der Zuführvorrichtung gesteuert wird. Die Erfassung der Ansaugleistung des Abladegebläses und die Steuerung der Zuführleistung der Zuführvorrichtung

kann auf verschiedene Weisen erfolgen.

In einer ersten, bevorzugten Ausführungsform besteht die Steuerungsvorrichtung nach dem Gegenstand des Anspruches 2 aus einer am freien Ende eines Schwenkarmes angeordneten Meßplatte, die in den Querschnitt des Ansaugstutzens des Abladegebläses ragt, wobei am anderen Ende des Schwenkarmes eine Signalplatte angeordnet ist, die einem im Schwenkbereich des Schwenkarmes zugeordneten Signalgeber mit Näherungsinitiator zugeordnet ist. Solange also die Ansaugleistung des Abladegebläses groß genug ist, und ein normaler Betriebszustand herrscht, wird die Meßplatte in Richtung auf das Gebläse des Abladegebläses gesaugt und nimmt eine stabile Arbeits- oder Signalstellung an. In dieser Signalstellung berührt gleichzeitig eine Signalplatte, welche am anderen Ende des frei verschwenkbaren Schwenkarmes angeordnet ist, einen Näherungs-Initiator, der ein Signal derart erzeugt, daß die Antriebsmotoren der Zuführvorrichtung eingeschaltet bleiben.

Wird aus irgendeinem der oben genannten Gründe das Abladegebläse überlastet, nimmt dadurch sofort der Ansaug-Unterdruck ab und die Meßplatte wird nicht mehr in Richtung zum Gebläse des Abladegebläses hin angesaugt. Hierdurch wird diese Meßplatte gewichtsbedingt in eine Ruhelage verschwenkt, wodurch gleichzeitig sich die Signalplatte von dem Näherungs-Initiator entfernt, der somit sein Ausgangssignal ändert. Dieses Ausgangssignal wird über entsprechende Starkstromschütze in einem Schaltschrank auf die Antriebsmotoren der Zuführvorrichtung gegeben, die hierdurch stillgesetzt werden, oder mit einer langsameren Zuführgeschwindigkeit laufen. Der Zustand wird solange aufrecht erhalten, bis das Abladegebläse seinen bestimmungsgemäßen Ansaug-Unterdruck erreicht hat, und hierdurch die Meßplatte wieder in Richtung zum Gebläse angezogen wird und die Signalplatte am Näherungs-Initiator wieder anliegt. Es wird also ein automatischer Zuführbetrieb vorgeschlagen, der vollkommen unabhängig von Eingriffen der Bedienungsperson funktioniert.

Statt eines Aus-Ein-Betriebes mit einer am freien Ende eines Schwenkarms angeordneten Signalplatte, die mit einem Näherungs-Initiator zusammenwirkt, kann auch ein kontinuierlicher Betrieb vorgesehen werden. In dieser zweiten Ausführungsform wird die Verschwenkung des Schwenkarmes unmittelbar auf ein stufenlos verstellbares Potentiometer gegeben.

Das Potentiometer kann hierbei beispielsweise in der Schwenkachse des Schwenkarmes angebracht werden, und die Potentiometerachse kann drehfest mit dem Schwenkarm verbunden werden.

Je stärker dann die Meßplatte in Richtung zum Gebläse gesaugt wird, d.h. je stärker der Ansaug-Unterdruck ist, desto höher kann dann auch die Antriebsleistung der Antriebsmotoren der Zuführvorrichtung sein. Wird durch irgendeinen der oben genannten Gründe das Abladegebläse verstopft oder überlastet, dann schwenkt die Meßplatte sofort vom Gebläse weg und das Potentiometer wird entsprechend verstellt, so daß über entsprechende Starkstrom-Einrichtungen die Antriebsleistung der Zuführvorrichtung stufenlos gesteuert werden kann.
Die Steuerung erfolgt hierbei im Sinne einer Verminderung der Antriebsleistung.

Statt der Anordnung einer im lichten Querschnitt des Ansaugstutzens schwenkbaren Meßplatte kann auch unmittelbar ein Unterdruck-Meßfühler am Ansaugstutzen angeordnet werden, der entsprechend seiner Signalgabe eine stufenlose Steuerung der Antriebsleistung der Zuführvorrichtung gewährleistet.

Auch das oben beschriebene, erste Ausführungsbeispiel mit den frei verschwenkbaren Schwenkarmen kann in mehreren Ausführungsformen realisiert werden. Statt der Verwendung einer Maßplatte, die mit einem induktiven Näherungs-Initiator zusammenwirkt, kann auch die Meßplatte nach dem Gegenstand des Anspruches 3 im Bereich einer Lichtschranke angeordnet sein, die entsprechend der Abschattung ein Signal auf die Steuerungsvorrichtung erzeugt und hiermit eine stufenlose Regelung der Antriebsleistung der Antriebsmotoren der Zuführvorrichtung möglich ist.

In einer dritten Ausführungsform ist es auch vorgesehen, daß statt einem induktiven Näherungs-Fühler entsprechende kapazitive Näherungs-Fühler oder mechanische Näherungsschalter verwendet werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte, räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Fig. 1 schematisiert die Transportkette einer Zuführvorrichtung;

Fig. 2 Teilansicht des Ansaugstutzens eines Abladegebläses mit einer darin angeordneten Steuerungsvorrichtung;

Fig. 3 schematisiert die Steuerungsvorrichtung nach Fig. 2.

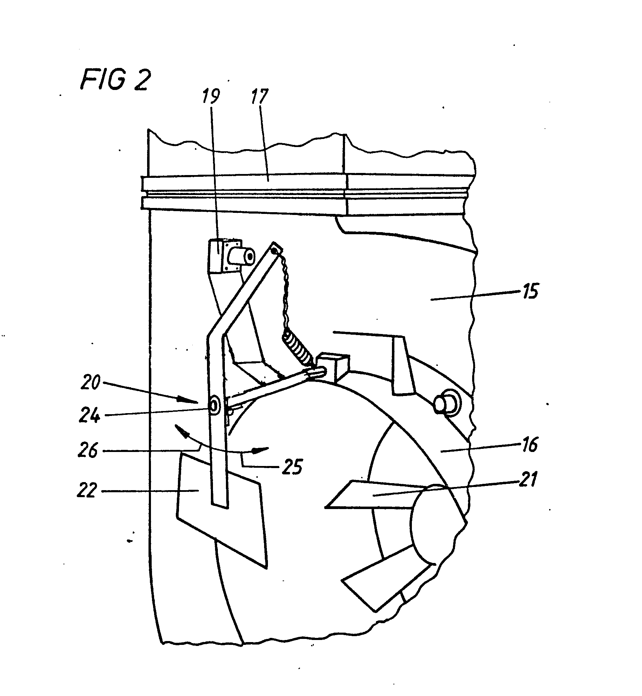

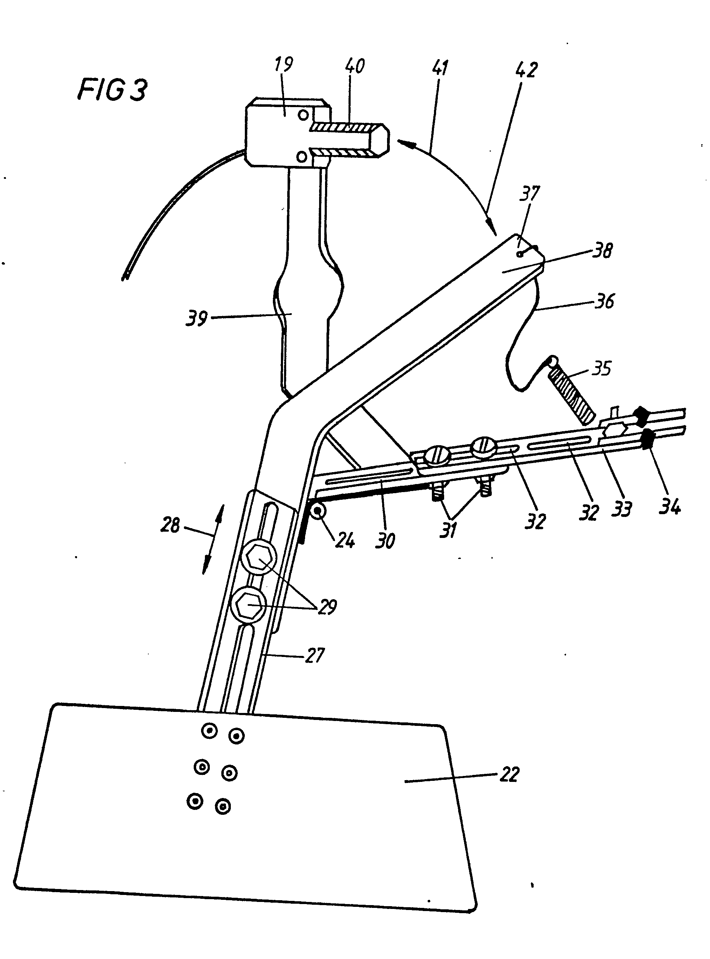

Die in Fig. 1 schematisiert gezeichnete Futterablade-Überwachungsanlage verwendet den nach den Fig. 2 und 3 näher beschriebenen Signalgeber 19 in Verbindung mit einem Schaltschrank, in dem die weiteren Steuerungsvorrichtungen angeordnet sind. Bei einer großen Anlage mit Zusatzkratzboden, wie sie in Fig. 1 gezeigt ist, benötigt man noch einen Grenztaster. Die gesamte, erfindungsgemäße Steuerungsvorrichtung 20 steuert den Zuführantrieb der in Fig. 1 dargestellten Förderanlage. Sie besteht hierbei aus einem ersten Aufgabefahrzeug 1, auf das das zu verteilende Grün- oder Silagefutter beispielsweise an der Aufgabestelle 3 aufgegeben wird.

Über einen Kratzboden 5 wird das Futter in Pfeilrichtung 4 auf ein zweites Aufgabefahrzeug 2 befördert, das mit einem gleichen Kratzboden 5 das Futter in Pfeilrichtung 4 einer Dosieranlage 6 zuführt. Die Dosieranlage 6 besteht aus einem Dosierförderband 10 und einem in den Pfeilrichtungen 8,9 verschwenkbaren Dosierrechen 7, der je nach Standhöhe des Futters auf dem Dosierförderband 10 mehr oder weniger Futter entsprechend der Schwenklage des Dosierrechens 7 abstreift. Das so dosierte Futter wird über das Dosierförderband 10 hinaus auf ein Förderband 11 befördert. Schematisiert ist im unteren Teil der Fig. 1 dieser Fluß mit Pfeilrichtung 12 angegeben. Das Förderband 11 fördert das dosiert aufgegebene Futter in Pfeilrichtung 13 auf ein Zuführmundstück 14, das vor dem Ansaugstutzen 16 eines Abladegebläses 15 angeordnet ist. Der erwähnte Signalgeber 19 einer Steuerungsvorrichtung 20, die später noch erläutert wird, ist an der eingezeichneten Stelle etwa angeordnet. Das Abladegebläse 15 befördert das Futter in Pfeilrichtung 18 aus einem Ausblasstutzen 17, wo es über nicht näher dargestellte Verteilerrohre in ein Silo oder einen Heuboden geschickt wird.

Fig. 2 zeigt weitere Einzelheiten der Befestigung und des Aussehens der erfindungsgemäßen Steuerungsvorrichtung 20. Am freien Ende eines in den Pfeilrichtungen 25,26 verschwenkbaren Schwenkarmes 27 ist eine Meßplatte 22 angeordnet, die bei bestimmungsgemäß gegebenem Unterdruck des Gebläses 21 in Pfeilrichtung 25 zum Gebläse 21 hin angezogen wird. Hierdurch wird der Schwenkarm 27 in seinem Schwenklager 24 derart in Pfeilrichtung 25 verschwenkt, daß eine an dem weiteren Schwenkarm 38 (vgl. Fig. 3) angebrachte Signalplatte einen Näherungs-Initiator 40 in einem am Gehäuse des Abladegebläses angeordneten Signalgeber 19 berührt. Die hierdurch definierte Signalstellung zeigt den bestimmungsgemäßen Arbeitszustand des Abladegebläses 15 an, wobei die Zuführvorrichtung, bestehend aus den Aufgabefahrzeugen 1,2, der Dosieranlage 6 und dem Förderband 11, mit normaler, bestimmungsgemäßer Geschwindigkeit arbeitet.

Die Fig. 3 zeigt weitere Einzelheiten der erfindungsgemäßen Steuerungsvorrichtung 20. Die Meßplatte 22 ist hierbei mit einem Schwenkarm 27 verbunden, der längenverstellbar über Feststellschrauben 29 und zugeordnete Langlöcher an einem abgewinkelten Schwenkarm 38 ansetzt. Es wird hierdurch also ein zweiarmiger Hebel gebildet, der im Schwenklager 24 in den Pfeilrichtungen 41,42 verschwenkbar an einem Verbindungshalter 30 befestigt ist. Der Verbindungshalter 30 ist wiederum längenverstellbar über Feststellschrauben 31 in Längsrichtung des Verbindungshalters 30 stufenlos verstellbar.

Der Verbindungshalter 30 seinerseits ist über die Feststellschrauben 31 mit einem Halter 33 verbunden, der über Befestigungen 34 am nicht näher dargestellten Gehäuse des Abladegebläses 15 befestigt ist. Durch die Anordnung der Langlöcher 32 im Abstand hintereinander kann auch die Länge des Verbindungshalters 30 auf eine. größere Länge hin verstellt werden; das gleiche gilt auch für den Schwenkarm 27, mit der Meßplatte 22, der ebenfalls in den Pfeilrichtungen 28 längenverstellbar ausgebildet ist.

In der in Fig. 3 dargestellten Lage befindet sich der Schwenkarm 27,38 in der Alarmstellung, d.h. es liegt eine Überlastung des Gebläses vor und die Meßplatte ist hierbei in Pfeilrichtung 26 (vgl. Fig. 2) verschwenkt, so daß die an dem Schwenkarm 38 angebrachte Signalplatte von dem Näherungs-Initiator 40 des Signalgebers 19 abgerissen ist.

In dieser Stellung werden die Antriebsmotoren der Zuführvorrichtung 1,2,6,11 abgeschaltet oder auf eine niedrigere Förderleistung umgeschaltet.

Sobald der Überlastungszustand beseitigt ist, verschwenkt die Meßplatte 22 selbsttätig gewichtsbelastet in der Pfeilrichtung 25 in Richtung zum Gebläse 21 (vgl. Fig. 2), so daß der Schwenkarm 38 mit einer Signalplatte am Näherungs-Initiator 40 in Pfeilrichtung 41 zur Anlage kommt.

Der Signalgeber 19 schaltet dann über nicht näher dargestellte Schaltschütze die Antriebsmotoren der Zuführvorrichtung 1,2,6,11 auf normale Arbeitsgeschwindigkeit um.
Die Meßplatte 22 wird hierbei unter der Wirkung des Unterdrucks des Gebläses 21 in Richtung 25 verschwenkt gehalten und arbeitet hier gegen die Kraft einer Zugfeder 35, die einerseits am Halter 33 und andererseits über eine Schnur 36 am freien, schwenkbaren Ende 37 des Schwenkarmes 38 befestigt ist.

Der Signalgeber 19 ist hierbei mit einem Haltebügel 39 an dem Verbindungshalter 30 mit Hilfe von Schrauben befestigt.

Wie ausgeführt, kann statt dem induktiven Signalgeber 19 auch ein kapazitiver Annäherungsfühler verwendet werden. Ebenso kann im Schwenkbereich entweder des Schwenkarmes 27 oder des Schwenkarmes 38 der Meßstrahl einer Lichtschranke angeordnet werden, deren Fotodiode mehr oder weniger - je nach Schwenklage des Schwenkarmes - abgeschaltet wird, und hierdurch ein Steuerungssignal erzeugt, das proportional dem Ansaug-Unterdruck des Gebläses ist.

In einer weiteren, nicht näher zeichnerisch dargestellten Ausführungsform wird ein Druckfühler verwendet, der unmittelbar den Ansaugdruck mischt und ein entsprechendes Meßsignal erzeugt, das zur Steuerung der Antriebsleistung der Zuführvorrichtung vorgesehen ist.

Statt eines zweiarmigen Hebels (Schwenkarm 27,38) kann auch ein einarmiger Schwenkhebel vorgesehen werden, wobei der Näherungs-Initiator 40 mit dem Signalgeber 19 dann wiederum im Schwenkbereich dieses einarmigen Hebels angeordnet ist.

In einer weiteren Ausführungsform ist es dann vorgesehen, daß am Verbindungshalter 30 das Gehäuse eines Drehpotentiometers befestigt ist, dessen Achse drehfest mit dem Schwenkarm 27,38 verbunden ist. Die Verschwenkung des Schwenkarmes 27,38 wird dann unmittelbar in eine Verdrehung der Potentiometerwelle umgesetzt, und es ist hierdurch eine kontinuierliche und stufenlose Regelung der Antriebsleistung der Zuführvorrichtung möglich.

Mit der gezeigten, erfindungsgemäßen Dosieranlage wird also eine automatische Dosierung erreicht, ohne daß Bedienungspersonen eingreifen müssen, und ohne daß eine Überlastung des Abladegebläses vorkommt.
Es werden damit wesentlich höhere Förderleistungen erzielt, weil die vorher gegebenen Stillstandszeiten aufgrund der Überlastung der Zuführvorrichtung oder des Abladegebläses wegfallen.

## Funktion der vollautomatischen Futterablade-überwachungsanlage

Der Steuerbefehl kommt vom Signalgeber. Schalter man das Abladegebläse 15 ein, wird vom Sog des Gebläses die Meßplatte 22 am Signalgeber in Richtung Gebläse angezogen. Dadurch kippt der Signalgeber 19 aus der Ruhestellung in die Arbeitsstellung. Erst dadurch wird die Dosieranlage 6 freigegeben. Jetzt schaltet man am Schaltschrank den Schalter für Gebläseüberwachung auf "Autom.", danach den Hauptschalter auf "1". Nun läuft die Anlage vollautomatisch an. Zuerst schaltet sich verzögert das Förderband 11 ein, danach schaltet sich verzögert das Dosierförderband 10 in "Sternschaltung" dazu. Wiederum später schaltet das Dosierförderband 10 verzögert auf "Dreieckschaltung" um. Somit ist die Anlage voll in Betrieb. Jetzt stellen Sie die optimale Dosierung an der Dosieranlage 6 ein.

Wird das Futtervolumen am Förderband 11 zu groß, streift das Futter an der Meßplatte 22 des Signalgebers 19. Der Signalgeber 19 geht kurzzeitig in Auslösestellung, danach wieder zurück in Arbeitsstellung. Durch das Auslösesignal wird das Förderband 11 und die Dosieranlage 6 sofort abgeschaltet. In dieser Zeit kann das Abladegebläse 15 das Futter, das noch im Gebläse ist, weiterbefördern. Es ist dann sofort wieder aufnahmebereit. Die Unterbrechung ist nur kurzzeitig, und daher bestehen kurze Ausfallzeiten. Danach schalten wieder verzögert der Reihe nach Förderband 11 und Dosieranlage 6 automatisch ein.

Futteransammlungen neben dem Förderband

Oft bilden sich kleine Häufchen, deren Größe immer stärker anwächst, bis sie vom Sog des Abladegebläses 15 erfaßt werden und das Gebläse überlasten. Die Drehzahl des Abladegebläses 15 sinkt und dadurch fällt auch der Sog ab. Der Signalgeber 19 kippt in Ruhestellung und löst somit aus. Das Förderband 11 und die Dosieranlage 6 werden sofort abgeschaltet, bis das Gebläse 15 wieder frei von Futter ist. Nun ist das Gebläse wieder aufnahmebereit. Der Signalgeber 19 kippt wieder in Arbeitsstellung zurück und schaltet das Förderband 11 und die Dosieranlage 6 der Reihe nach verzögert wieder ein.

Diese Anlage kann man am Schaltschrank auch auf "Hand" schalten. Dadurch wird die "Automatik" überbrückt, und man kann weiterhin abladen wie bisher.

Der Signalgeber 19 muß so eingestellt werden, damit in Arbeitsstellung das Schwenkarmende 37 in der Mitte der Kontaktfläche des Näherungsinitiators 40 steht.

Patentansprüche
--------------------------------

1. Vorrichtung zum Abladen von Futter, wie Grünfutter, Silage und dgl., mit einem Abladegebläse (15), dessen Ansaugstutzen (16) das Futter über eine Zuführvorrichtung (1,2,6,11) zugeführt und aus dessen Ausblasstutzen das Futter ausgeblasen wird, d a d u r c h g e k e n n z e i c h n e t , daß am Ansaugstutzen (16) des Abladegebläses (15) eine Steuerungsvorrichtung (20) angeordnet ist, welche den Ansaug-Unterdruck erfaßt und in Abhängigkeit hiervon die Aufgabe des Futters auf die Zuführvorrichtung (1,2,6,11) steuert.

2. Vorrichtung nach Anspruch 1, d a d u r c h g e k e n n z e i c h n e t , daß die Steuerungsvorrichtung (20) aus einer am freien Ende eines Schwenkarmes (27) angeordneten Meßplatte (22) besteht, die in den lichten Querschnitt des Ansaugstutzens (16) des Abladegebläses (15) ragt und daß am anderen Ende des Schwenkarmes (38) eine Signalplatte angeordnet ist, die einem im Schwenkbereich des Schwenkarmes (38) angeordneten Signalgeber (19) mit Näherungsinitiator (40) zugeordnet ist.

3. Vorrichtung nach Anspruch 1, d a d u r c h g e k e n n z e i c h n e t , daß die Steuerungsvorrichtung aus einem zweiarmigen Schwenkarm (27,38) besteht, in dessen Schwenkbereich eine Lichtschranke angeordnet ist.

4. Vorrichtung nach Anspruch 1, d a d u r c h g e k e n n z e i c h n e t , daß die Steuerungsvorrichtung aus einem zweiarmigen Schwenkarm (27,38) besteht, an dessen einem freien Ende die Meßplatte (22) und an dessen anderem freien Ende der Verstellteil eines stufenlos verstellbaren Potentiometers ansetzt.

5. Vorrichtung nach Anspruch 1, d a d u r c h  g e k e n n z e i c h n e t , daß die Steuerungsvorrichtung aus einem im Ansaugstutzen (16) des Abladegebläses (15) angeordneten Unterdruck-Meßfühler besteht, dessen Meßsignal die Leistung der Zuführvorrichtung (1,2,6,11) steuert.

6. Vorrichtung nach Anspruch 2, d a d u r c h  g e k e n n z e i c h n e t , daß die Länge der Schwenkarme (27,38) verstellbar ist.

7. Vorrichtung nach Anspruch 2 oder 6, d a d u r c h  g e k e n n z e i c h n e t , daß die Länge der Halterung (30,33) verstellbar ist.

8. Vorrichtung nach einem der Ansprüche 2, 6, 7, d a d u r c h  g e k e n n z e i c h n e t , daß das Verschwenken des Schwenkarmes (27,38) in die Signalstellung federbelastet (Zugfeder 35) erfolgt und daß die Rückstellung gewichtsbelastet erfolgt.

FIG 1

FIG 2

0056835

3/3

FIG 3